# EUROPEAN PATENT APPLICATION

(11) **EP 4 286 348 A1**
(43) Date of publication of application: **06.12.2023**
(21) Application number: 22746213.2
(22) Date of filing: 26.01.2022
(51) Int. Cl.: C03C 8/20, C03C 8/08, C03C 8/04, C03C 3/064, C03C 3/066, F24C 15/10, H05B 6/12

(54) **ENAMEL COMPOSITION, METHOD FOR MANUFACTURING SAME, AND KITCHENWARE USING SAME**

(30) Priority: 26.01.2021 KR 20210010594
(71) Applicant: LG Electronics Inc., Yeongdeungpo-gu Seoul 07336 (KR)
(72) Inventor: KIM, Ju Hyeong, Seoul 08592 (KR); YANG, Jaekyung, Seoul 08592 (KR); KIM, Taeho, Seoul 08592 (KR); KIM, Taehee, Seoul 08592 (KR); SHIN, Jaeyoung, Seoul 08592 (KR)
(74) Representative: Vossius & Partner Patentanwälte Rechtsanwälte mbB
(86) International application number: PCT/KR2022/001355
(87) International publication number: WO 2022/164186

(57) **Abstract**

Disclosed are: an enamel composition which has excellent cleaning functionality, and which, when used to form an enamel coating on a metal base material, ensures excellent thermal shock resistance and durability by suppressing the generation of defects caused by gas generation; a method for manufacturing same; and kitchenware using same. In addition, the enamel composition according to the present invention has excellent thermal shock resistance and durability due to having a component system in which glass-forming components and catalytic components are optimized.

## Description

### [Technical Field]

Embodiments of the present invention relate to an enamel composition, a method of preparing the same, and a cooking appliance using the same.

### [Background Art]

Enamels are formed of a metal plate of which a surface is coated with a glass glaze. General enamels are used for cooking appliances such as microwaves and ovens. The cooking appliances such as electric ovens and gas ovens are devices for cooking food using a heating source.

Since contaminants and the like generated during a cooking process adhere to an inner wall of a cavity of a cooking appliance, it is necessary to clean the inner wall of the cavity. In addition, a surface of the inner wall of the cavity of the cooking appliance is coated with enamel to facilitate removal of the contaminants on the cooking appliance.

In general, a pyrolysis method of burning contaminants at high temperatures to ash is known as a technology through which the inner wall of the cavity can be easily burned, and an enamel composition containing components such as P₂O₅, SiO₂, and B₂O₃ is known as an enamel composition to which the pyrolysis method is applied.

It is impossible to clean conventional enamel compositions unless they are heat-treated at high temperatures. Accordingly, the conventional enamel composition can only be applied to an inner portion of a cooking appliance and cannot be applied to an outer portion of the cooking appliance

In addition, the conventional enamel composition is fired at a high temperature of approximately 850 °C or more to form an enamel coating layer. When the enamel composition is applied to a surface of a metal base material and the enamel composition is fired at a high temperature of 850 °C or more, a problem that a structure of the metal base material is deformed may occur.

In addition, since a process of macerating the conventional enamel composition is required using moisture for a predetermined time period to remove oil contaminants such as oil of cattle, a pig, and poultry, there is a problem that a cleaning process is cumbersome.

(Patent Document 1) Korean Registered Patent No. 10-1385975 (Published on April 21, 2014)

### [Disclosure]

### [Technical Problem]

The present invention is directed to providing an enamel composition which has a superior cleaning function and in which the generation of bubbles due to gas is suppressed when an enamel coating is performed on a metal base material to secure superior thermal shock resistance and durability, a method of preparing the same, and a cooking appliance using the same.

The present invention is directed to providing an enamel composition having a component system in which components forming glass and components having catalytic performance are optimized to have superior thermal shock resistance and durability.

In addition, the present invention is directed to providing an enamel composition of which a firing temperature is lowered to prevent deformation of a base material, a method of preparing the same, and a cooking appliance using the same.

The objectives of the present invention are not limited to the above-mentioned objectives, and other objectives and advantages of the present invention which are not mentioned may be understood through the description below and will be more clearly understood from embodiments of the present invention. In addition, it may be easy to see that the objectives and the advantages of present invention may be realized by the means defined in the claims and their combinations.

### [Technical Solution]

An enamel composition according to an embodiment of the present invention includes P₂O₅ at a relatively high ratio in order to lower a firing temperature to minimize deformation of a base material and suppress bubble generation and has a component system in which contents of Al, Ti, and Zr components, which improve chemical resistance and raise a high-temperature viscosity, and R₂O components, which degrade the chemical resistance and lower the high-temperature viscosity, are adjusted.

More specifically, the enamel composition according to the present invention includes P₂O₅ at 15 to 25 wt%, SiO₂ at 10 to 25 wt%, Al₂O₃ at 12 to 16 wt%, ZrO₂ at 0.1 to 4 wt%, one or more among Na₂O and K₂O at 10 to 25 wt%, Li₂O at 0.5 to 3 wt%, B₂O₃ at 14 to 20 wt%, TiO₂ at 0.5 to 4 wt%, CoO at 0.5 to 1.2 wt%, and NiO at 1 to 4 wt%.

In addition, the enamel composition according to the embodiment of the present invention may further include ZnO at 5 wt% or less, NaF at 5 wt% or less, Fe₂O₃ at 1 wt% or less, and CuO at 0.5 wt% or less.

### [Advantageous Effects]

According to embodiments of the present invention, since an enamel composition has a component system in which components forming glass and components having catalytic performance are optimized, all contaminants can be easily removed without macerating the enamel composition in water at room temperature.

In addition, an enamel composition according to the present invention can be fired at a relatively low temperature. Accordingly, the deformation of a base material on which the enamel composition according to the present invention is applied can be minimized.

In addition, since a high-temperature viscosity of an enamel composition according to the present invention is improved, bubbles are not generated during a firing process.

In addition, since an enamel coating layer of the present invention has a component system in which components forming glass and components having catalytic performance are optimized, the enamel coating layer has superior thermal shock resistance and durability.

In addition to the above-described effects, specific effects of the present invention will be described in the following description of specific embodiments for implementing the invention.

### [Description of Drawings]

FIG. 1 is a perspective view illustrating a cooking appliance according to an embodiment of the present invention.
FIG. 2 is an enlarged view illustrating a grate portion of FIG. 1.
FIG. 3 shows images of enamel coating surfaces of examples and a comparative example.

### [Modes of the Invention]

The above-described purposes, features, and advantages will be described in detail with reference to the accompanying drawings, and thus the technical spirit of the present invention may be easily implemented by those skilled in the art. In describing the present invention, detailed descriptions of well-known technologies related to the present invention that unnecessarily obscure the gist of the invention will be omitted. Hereinafter, exemplary embodiments of the present invention will be described in detail with reference to the accompanying drawings. The same element or similar elements are denoted by the same reference numerals in the drawings.

The singular forms used in the present specification are intended to include the plural forms as well, unless the context clearly indicates otherwise. It should be interpreted that the term "comprise" or "include," when used herein, does not necessarily indicate the inclusion of all components or various operations stated in the specification, and some components and operations described therewith may be omitted or additional components and operations may be further included.

Hereinafter, an enamel composition, a method of preparing the same, and a cooking appliance using the same according to some embodiments of the present invention will be described.

### Enamel composition

In general, a top plate of a cooking appliance is formed of an iron-based metal material. In order to facilitate surface cleaning of the top plate, a surface of the top plate may be coated with an enamel composition. However, the conventional enamel composition is fired at a high temperature of approximately 850 °C or more to form an enamel coating layer. When the surface of the top plate is coated with the conventional enamel composition and the enamel composition is fired at the high temperature of 850 °C or more, warpage of the top plate may occur, and a structure of the top plate may be deformed.

Accordingly, a new enamel composition capable of preventing deformation of a base material is required, and thus the present invention provides an enamel composition of which a firing temperature is lowered to 810 °C or less to prevent deformation of a base material.

In addition, in the enamel composition according to the embodiment of the present invention, a high-temperature viscosity is lowered to suppress generation of bubbles, and the enamel composition has a component system in which components forming glass and components having catalyst performance are optimized to have superior thermal shock resistance and durability.

To this end, the enamel composition according to the present invention has a component system including P₂O₅ at 15 to 25 wt%, SiO₂ at 10 to 25 wt%, Al₂O₃ at 12 to 16 wt%, ZrO₂ at 0.1 to 4 wt%, one or more among Na₂O and K₂O at 10 to 25 wt%, Li₂O at 0.5 to 3 wt%, B₂O₃ at 14 to 20 wt%, TiO₂ at 0.5 to 4 wt%, CoO at 0.5 to 1.2 wt%, and NiO at 1 to 4 wt%.

Hereinafter, a function and a content of each component of the enamel composition according to the embodiment of the present invention will be described in detail.

P₂O₅ is a component which serves to form an alkali phosphate glass structure. In addition, P₂O₅ is a glass former which facilitates adding a large amount of a transition metal oxide to the enamel composition and serves to help water to penetrate between an enamel surface and contaminants to easily remove the contaminants. P₂O₅ may be added at a content ratio of 15 to 25 wt% of a total weight of the enamel composition according to the present invention, and 18 to 24 wt% may be suggested as a more preferable range. When a large amount of P₂O₅ is added at more than 25 wt%, vitrification of the enamel composition may be difficult, and thermal properties of the enamel composition may be degraded. Conversely, when P₂O₅ is added at less than 15 wt%, an additional amount of a transition metal oxide may be reduced, which would degrade a cleaning function.

SiO₂ is a component which forms a glass structure, strengthens a frame of the glass structure to improve chemical resistance of the enamel composition, and helps a metal oxide acting as a catalyst to exhibit properties of the metal oxide. Since the catalyst metal oxide has inferior thermal resistance or chemical resistance compared to other components, a large amount thereof cannot be included in the enamel composition. However, since SiO₂ has a structure with a large pore size, a solubility of the catalyst metal oxide in the enamel composition may be increased when an appropriate amount of SiO₂ is included. Accordingly, a content ratio of SiO₂ and the catalyst metal oxide may be properly controlled to exhibit properties of the catalyst metal oxide in addition to superior thermal resistance and chemical resistance.

SiO₂ may be added at a content ratio of 10 to 25 wt% of the total weight of the enamel composition according to the present invention, and 13 to 20 wt% may be suggested as a more preferable range. When SiO₂ is excessively added at more than 25 wt%, addition of other components may be restricted, and thus a problem that a cleaning function is degraded may occur. Conversely, when SiO₂ is added at less than 25 wt%, it is difficult to properly exhibit an effect of improving chemical resi stance.

Al₂O₃ compensates for weak durability of the alkaline phosphate glass structure and has an effect of improving a hardness of the enamel surface. Al₂O₃ may be added at a content ratio of 12 to 16 wt% of the total weight of the enamel composition according to the present invention, and 13 to 15 wt% may be suggested as a more preferable range. When Al₂O₃ is excessively added at more than 16 wt%, a melting temperature may rise, and a fusion flow may increase, and thus adhesion of an enamel coating layer may be degraded. Conversely, when Al₂O₃ is added at less than 12 wt%, durability of the enamel coating layer may be degraded.

ZrO₂ is a component which improves chemical durability of the alkaline phosphate glass structure and improves adhesion and thermal resistance. ZrO₂ may be included at 0.1 to 4 wt%. When ZrO₂ is excessively added at more than 4 wt%, adhesion and thermal resistance of the enamel coating layer may be degraded. Conversely, when ZrO₂ is added at less than 0.1 wt%, chemical durability may be degraded.

Na₂O and K₂O are components which act to, together with P₂O₅, improve cleaning performance. Na₂O and K₂O may be added at a content ratio of 10 to 25 wt% of the total weight of the enamel composition according to the present invention. When a large amount of Na₂O and K₂O is added at more than 25 wt%, there is a problem that a thermal expansion coefficient of glass is extremely increased, which degrades coating performance. Conversely, when Na₂O and K₂O are added at less than 10 wt%, there is a problem that cleaning performance is degraded.

Li₂O is a component which serves as a catalyst to suppress gas generation from a surface of the enamel coating layer which coats the top plate formed of the iron-based metal material.

Li₂O may be added at a content ratio of 0.5 to 3 wt% of the total weight of the enamel composition according to the present invention. When a large amount of Li₂O is added at more than 3 wt%, addition of other components may be restricted, and thus a problem that durability is degraded may occur. Conversely, when LiaO is added at less than 0.5 wt%, it is difficult to sufficiently exhibit an effect of suppressing gas generation.

B₂O₃ is a component which serves as a glass former and serves to uniformly dissolve the components of the enamel composition. In addition, B₂O₃ serves to adjust a thermal expansion coefficient and a high-temperature spread ability of the enamel composition to improve coating performance. In addition, B₂O₃ serves to maintain an appropriate viscosity during a firing process of an enamel and to keep crystallization of the enamel composition from occurring. B₂O₃ may be added at a content ratio of 14 to 20 wt% of the total weight of the enamel composition according to the present invention, and 15 to 19 wt% may be suggested as a more preferable range. When B₂O₃ is excessively added at more than 20 wt%, addition of other components may be restricted, and thus a problem that a cleaning function is degraded may occur. When B₂O₃ is added at less than 14 wt%, a glass composition may collapse, and crystallization of the enamel composition may occur.

TiO₂ is a component which serves to, together with Al₂O₃, supplement weak durability of the alkaline phosphate glass structure and to improve hardness of a surface of the enamel. TiO₂ is included at 0.5 to 4 wt%. When TiO₂ is excessively added at more than 4 wt%, a melting temperature may rise, a fusion flow may increase, and thus adhesion of the enamel coating layer may be degraded. Conversely, when TiO₂ is included at less than 0.5 wt%, durability of the enamel coating layer of the present invention may be degraded.

CoO is included in the enamel composition of the present invention at 0.5 to 1.2 wt% to improve adhesion. When CoO is excessively added at more than 1.2 wt%, addition of other components may be restricted, and thus other performance such as cleaning performance may be degraded. Conversely, when CoO is included at less than 0.5 wt%, adhesion may be degraded.

Like CoO, NiO is a component which improves performance of adhesion to the base material. In addition, NiO is a component which allows implementation of black enamel coating. In order to implement the black enamel coating, the enamel composition of the present invention includes NiO at 1 wt% or more. Conversely, when NiO is included at less than 1 wt%, adhesion performance may be degraded, and the black enamel coating may not be realized.

In addition, the enamel composition of the present invention may further include ZnO at 5 wt% or less, may further include NaF at 5 wt% or less, may further include Fe₂O₃ at 1 wt% or less, and may further include CuO at 0.5 wt% or less.

ZnO may be included at 5 wt% or less to control surface tension of the coating layer.

NaF is a component which serves, together with Li₂O, to adjust a viscosity when enamel coating is performed. When the viscosity is too high at a firing temperature, surface defects may occur, and thus the viscosity can be properly controlled by adding NaF and Li₂O. Viscosity improving

The enamel composition of the present invention may further include Fe₂O₃ and CuO to improve adhesion performance. When Fe₂O₃ is included at more than 1 wt%, or CuO is included at more than 0.5 wt%, addition of other components is rather restricted, and there is a problem of difficulty in implementing the black enamel coating.

### Method of preparing enamel composition

A method of preparing the enamel composition according to the embodiment of the present invention includes preparing and providing the above-described enamel composition raw materials, melting the enamel composition raw materials, and cooling the molten enamel composition.

In the present operation, the melting may be performed at a temperature of 1,300 to 1,500 °C for 30 to 60 minutes.

Then, the molten enamel composition may be cooled by a quenching roller through a quenching method using a chiller and the like. Accordingly, the enamel composition may be formed.

### Cooking appliance

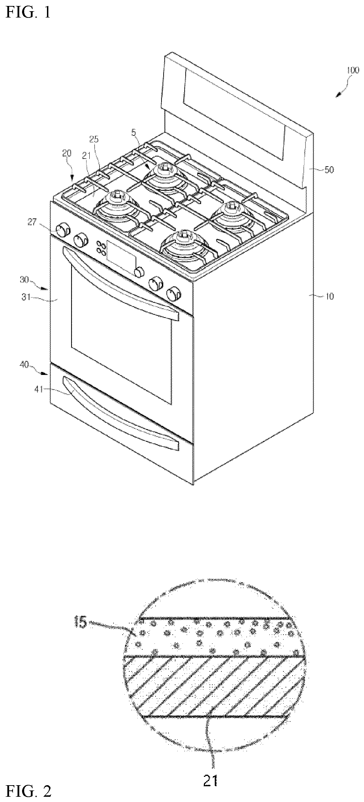

FIG. 1 is a perspective view illustrating a cooking appliance according to an embodiment of the present invention, and FIG. 2 is an enlarged view illustrating a grate portion of FIG. 1.

As illustrated in FIG. 1, a cooking appliance 100 according to the embodiment of the present invention includes a cabinet 10, a cooktop unit 20, and an oven unit 30. In addition, the cooking appliance 100 according to the embodiment of the present invention may further include a drawer unit 40 and a control panel 50.

The cabinet 10 forms an exterior of the cooking appliance 100 and may have a hexahedral box shape but is not limited thereto.

The cooktop unit 20 is mounted on an upper portion of the cabinet 10 and has at least one grate 25 to support food heated by a burner 5.

In addition, the cooktop unit 20 further includes a top plate 21 and an operating knob 27. In this case, it is illustrated that four burners 5 are installed on the top plate 21, but this is exemplary, and it is clear that the number of burners 5 may be variously changed. The burner 5 burns a mixed gas mixed with air to generate a flame for heating food. In addition, the operating knob 27 is mounted to operate operation of the burner 5.

The oven unit 30 includes a cavity, which is disposed in the cabinet 10 corresponding to a portion under the cooktop unit 20 and forms a cooking chamber, and a door 31 which selectively opens or closes the cooking chamber. That is, the oven unit 30 includes the cooking chamber in which food is cooked. In addition, the cooking chamber is selectively opened or closed by the door 31. Although not illustrated in the drawings, at least one of a heating source, for example, a broil burner, a bake burner, and a convection apparatus, for heating food may be mounted in the cooking chamber.

The drawer unit 40 may be disposed in the cabinet 10 corresponding to a portion under the oven unit 30. The drawer unit 40 serves to warm up a container in which food is contained. The drawer unit 40 includes a drawer 41 which is inserted into or withdrawn from the cabinet 10 and stores the container.

The control panel 50 may be disposed on a rear end of an upper surface of the cabinet 10 corresponding to a portion behind the cooktop unit 20. The control panel 50 receives a signal for operation of the oven unit 30 and the drawer unit 40 and displays information regarding the operation of the oven unit 30 and the drawer unit 40.

In addition, as illustrated in FIGS. 1 and 2, the cooking appliance 100 according to the embodiment of the present invention further includes an enamel coating layer 15.

The enamel coating layer 15 may be fired at 810 °C or less and have a black color.

The enamel coating layer 15 is formed on a surface of the top plate 21. In this case, an example in which the top plate 21 of the cooktop unit 20 is coated with the enamel coating layer 15 is illustrated in FIG. 2.

The enamel coating layer 15 is formed of the enamel composition of the present invention described above. In this case, the enamel coating layer 15 may be formed to cover an entire exposed surface of the top plate 21.

As described above, since the enamel coating layer of the present invention has a component system in which components forming glass and components having catalytic performance are optimized, all contaminants can be easily removed from the enamel coating layer without macerating the contaminants in water at room temperature.

In addition, since a high-temperature viscosity of the enamel coating layer of the present invention is improved to secure superior high-temperature spread ability during a firing process, when enamel coating is performed on the top plate, defects such as cracks can be prevented in advance due to an effect of suppressing defects due to gas generation.

In addition, the enamel composition according to the present invention may be fired at a relatively low temperature. Accordingly, deformation of a base material to which the enamel composition according to the present invention is applied can be minimized.

In addition, since the enamel coating layer of the present invention has the component system in which components forming glass and components having catalytic performance are optimized, the enamel coating layer has superior thermal shock resistance and durability.

### Example

Hereinafter, a structure and an operation of the present invention will be described in more detail through an exemplary embodiment of the present invention. However, this is an exemplary embodiment of the present invention and should not be construed as limiting the present invention in any sense.

Since content which is not described in this specification can be sufficiently technically inferred by those skilled in the art, the description thereof will be omitted.

### 1. Preparation of enamel composition

Enamel compositions of Examples 1 to 3 and Comparative Example 1 having composition ratios described in Table 1 were prepared. In this case, raw materials of components were sufficiently mixed in a V-mixer for 3 hours. In this case, Na₂CO₃, K₂CO₃, and Li₂CO₃ were used as the raw materials of Na₂O, K₂O, and Li₂O, respectively, and the remaining components were the same as components described in Table 1. The mixed materials ware melted at 1,400 °C for 50 minutes and quenched in the quenching roller to obtain glass cullet.

Next, acetone to which organopolysiloxane (DOW Coming 1107) was added at 0.5 wt% was mixed with the glass cullet, the glass cullet was crushed by a ball mill and dried for 5 hours, and then the glass cullet was controlled to pass through a 325 mesh sheave (ASTM C285-88) to have a particle diameter of 45 µm or less. A powder passing through the mesh sheave in this way was used as enamel composition frit.

**[Table 1] (Unit: wt%)**

| Classification | Example 1 | Example 2 | Example 3 | Comparative Example 1 |
|---|---|---|---|---|
| P₂O₅ | 22.2 | 23.2 | 23.2 | 12 |
| SiO₂ | 18.3 | 17.3 | 17.3 | 28 |
| Al₂O₃ | 14.1 | 14.1 | 14.1 | 10 |
| ZrO₂ | 2.2 | 2.2 | 2.2 | 18 |
| Na₂O | 9.2 | 8.2 | 8.2 | 12 |
| K₂O | 9.2 | 7.2 | 7.2 | 2.1 |
| Li₂O | 0.7 | 0.7 | 0.7 | 4 |
| B₂O₃ | 16.6 | 17.6 | 17.9 | 2 |
| ZnO | 0.5 | 0 | 0 | 8.2 |
| TiO₂ | 2 | 2 | 2 | 2 |
| NaF | 1.4 | 1.9 | 1.9 | 0 |
| CoO | 1 | 1 | 1 | 0 |
| Fe₂O₃ | 0.3 | 0.3 | 0 | 1.5 |
| NiO | 2.1 | 2.1 | 2.1 | 0.2 |
| CuO | 0.2 | 0.2 | 0.2 | 0 |
| V₂O₃ | 0 | 0 | 0 | 0 |
| SnO | 0 | 0 | 0 | 0 |
| Total | 100 | 100 | 100 | 100 |

### Enamel specimen preparation

Enamel composition frits prepared using the enamel compositions according to Examples 1 to 3 and Comparative Example 1 were each sprayed on a cast iron sheet of 200 mm in width, 100 mm in height, and 1 mm in thickness, using a corona discharge gun. A voltage of the discharge gun was controlled in the range of 40 to 100 kV, and an amount of frits with which spray-coating is performed on each cast iron sheet was 300 g/m².

The steel sheets spray-coated with the frits were fired at a temperature of 810 °C for 600 sec to form coating layers each having a thickness of 200 on one side of the steel sheet. As described above, enamel specimens of Examples 1 to 3 and Comparative Example 1 ware prepared.

### 2. Physical property evaluation

Table 2 shows results of physical property evaluation of the enamel specimens of Examples 1 to 3 and Comparative Example 1.

### 1) Softening point and thermal expansion coefficient

After both surfaces of each of the enamel specimens of Examples 1 to 3 and Comparative Example 1 were polished to be parallel to each other, the enamel specimens were heated using a thermomechanical analyzer (TMA) at a temperature rising rate of 10 °C/min to immediately after a softening point (Ts), and softening points and thermal expansion coefficients were measured.

### 2) Chemical resistance

Acid resistance performance and alkaline resistance performance of the enamel specimens of Examples 1 to 3 and Comparative Example 1 were measured. For acid resistance evaluation, a few drops of a solution of citric acid at 10 wt% were dropped on each enamel specimen, the solution was cleanly wiped off after 15 minutes, and a surface change was observed.

Alkaline resistance evaluation was performed through the same method as that of the acid resistance evaluation, but a solution of anhydrous sodium carbonate at 10 wt% was used as a reagent. In this case, degrees of the acid resistance performance and the alkaline resistance performance are evaluated through the ASTM ISO 2722 method, with AA representing very good, A representing good, B representing moderate, C representing low, and D representing very low.

### 3) Cleaning performance

A method of measuring cleaning performance is to uniformly apply 1 g of olive oil as a contaminant to each surface of the enamel specimens of Examples 1 to 3 and Comparative Example 1, put the specimens, on which the contaminant is applied, in a thermostat, and solidify the contaminant at a temperature of 240 °C for 1 hour.

After the solidification, the specimens were naturally cooled, curing degrees of the specimens were checked, and then the specimens were immersed in a water bath containing water at 25 °C for 10 minutes. Then, the cured olive oil was removed using a wet cloth with a force of 2.5 kgf or less. A rod having a flat bottom with a diameter of 5 cm was used to wipe the contaminated enamel surfaces so that wiped portions were uniform. In this case, the number of reciprocating wipes was measured and defined as the number of cleanings.

### 4) Viscosity improvement effect

In the specimens of Example 1 and Comparative Example 1, it was observed whether bubbles were generated and whether surface defects occurred in an air-cooling process after firing for 600 sec at a temperature of 810 °C.

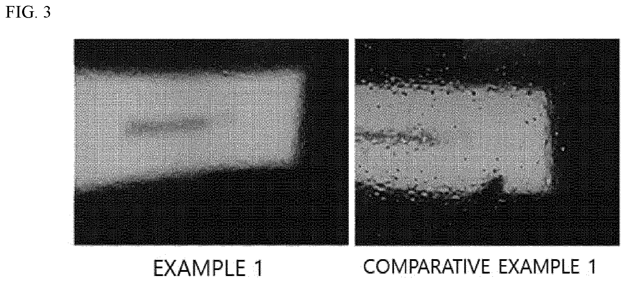

Results showing whether bubbles were generated in the specimens of Example 1 and Comparative Example 1 are illustrated in FIG. 3.

**[Table 2]**

| Classification | Example 1 | Example 2 | Example 3 | Comparative Example 1 |
|---|---|---|---|---|
| Softening point (°C) | 565 | 498 | 514 | 558 |
| Thermal expansion coefficient | 106×10 ⁷/°C | 114×10 ⁻⁷/°C | 115×10⁷/°C | 96×10 ⁷/°C |
| Acid resistance performance | AA | A | AA | AA |
| Alkaline resistance | AA | AA | AA | AA |
| performance | | | | |
| Cleaning performance | 5 | 5 | 5 | 3 |

As illustrated in Tables 1 and 2, in the case of the enamel specimen according to Example 1, a softening point was 565 °C, a thermal expansion coefficient was 106×10⁻⁷/°C, a chemical resistance was very good, or AA, a cleaning performance of 5 was measured, and thus very good properties were confirmed.

In addition, also in the case of the enamel specimen of Example 2, a softening point was 498 °C, a thermal expansion coefficient was 114×10⁻⁷/°C, a chemical resistance was good, or A, a cleaning performance of 5 was measured, and thus very good properties were confirmed.

In addition, in the case of the enamel specimen of Example 3, a softening point was 514 °C, a thermal expansion coefficient was 115×10⁻⁷/°C, a chemical resistance was very good, or AA, a cleaning performance of 5 was measured, and thus very good properties were confirmed.

Conversely, in the enamel specimen of Comparative Example 1, a softening point was 558 °C, and a thermal expansion coefficient was 96×10⁻⁷/°C. In addition, the enamel specimen of Comparative Example 1 had a very good chemical resistance of AA, but only a moderate cleaning performance of 3 was measured.

As described above, in the case of the enamel specimen of Comparative Example 1, it may be seen that the cleaning performance is poor, which is understood to be because a small amount of P₂O₅ less than the range according to the present invention was added.

Next, referring to FIG. 3, it can be seen that the surface of the enamel coating of Example 1 does not generate bubbles, but the surface of the enamel coating of Comparative Example 1 generates bubbles. Although not illustrated in the drawing, like Example 1, no bubbles were generated on the surfaces of the enamel coatings of Examples 2 and 3.

Although the present invention has been described above with reference to the accompanying drawings, the present invention is not limited by the embodiments and drawings illustrated in the present specification, and it is clear that the present invention can be variously modified by those skilled in the art within the scope of the technical spirit of the present invention. In addition, although the operational effects according to the structure of the present invention have not been clearly described in description of the embodiments of the present invention, predictable effects according to the corresponding structure should also be recognized.

### [Description of reference numerals]

100: COOKING APPLIANCE
5: BURNER
10: CABINET
15: ENAMEL COATING LAYER
20: COOKTOP UNIT
21: PLATE
25: GRATE
27: OPERATING KNOB
30: OVEN UNIT
31: DOOR
40: DRAWER UNIT
41: DRAWER
50: CONTROL PANEL

## Claims

1. An enamel composition comprising:
P₂O₅ at 15 to 25 wt%;
SiO₂ at 10 to 25 wt%;
Al₂O₃ at 12 to 16 wt%;
ZrO₂ at 0.1 to 4 wt%;
one or more among Na₂O and K₂O at 10 to 25 wt%;
Li₂O at 0.5 to 3 wt%;
B₂O₃ at 14 to 20 wt%;
TiO₂ at 0.5 to 4 wt%;
CoO at 0.5 to 1.2 wt%; and
NiO at 1 to 4 wt%;

2. The enamel composition of claim 1, further comprising ZnO at 5 wt% or less.

3. The enamel composition of claim 1, further comprising NaF at 5 wt% or less.

4. The enamel composition of claim 1, further comprising Fe₂O₃ at 1 wt% or less.

5. The enamel composition of claim 1, further comprising CuO at 0.5 wt% or less.

6. A method of preparing an enamel composition comprising:
providing enamel composition raw materials including P₂O₅ at 15 to 25 wt%, SiO₂ at 10 to 25 wt%, Al₂O₃ at 12 to 16 wt%, ZrO₂ at 0.1 to 4 wt%, one or more among Na₂O and K₂O at 10 to 25 wt%, Li₂O at 0.5 to 3 wt%, B₂O₃ at 14 to 20 wt%, TiO₂ at 0.5 to 4 wt%, CoO at 0.5 to 1.2 wt%, and NiO at 1 to 4 wt%;
melting the enamel composition raw materials; and
cooling the molten enamel composition.

7. The method of claim 6, wherein the enamel composition raw materials further include ZnO at 5 wt% or less.

8. The method of claim 6, wherein the enamel composition raw materials further include NaF at 5 wt% or less.

9. The method of claim 6, wherein the enamel composition raw materials further include Fe₂O₃ at 1 wt% or less.

10. The method of claim 6, wherein the enamel composition raw materials further include CuO at 0.5 wt% or less.

11. A cooking appliance comprising:
a cabinet;
a cooktop unit mounted on an upper end of the cabinet and including a top plate;
an oven unit having a cavity, which is disposed in the cabinet corresponding to a portion under the cooktop unit and forms a cooking chamber, and a door which selectively opens or closes the cooking chamber; and
an enamel coating layer with which a surface of the top plate is coated,
wherein the enamel coating layer is formed of an enamel composition including P₂O₅ at 15 to 25 wt%, SiO₂ at 10 to 25 wt%, Al₂O₃ at 12 to 16 wt%, ZrO₂ at 0.1 to 4 wt%, one or more among Na₂O and K₂O at 10 to 25 wt%, Li₂O at 0.5 to 3 wt%, B₂O₃ at 14 to 20 wt%, TiO₂ at 0.5 to 4 wt%, CoO at 0.5 to 1.2 wt%, and NiO at 1 to 4 wt%.

12. The cooking appliance of claim 11, wherein the enamel coating layer is fired at 810 °C or less.

13. The cooking appliance of claim 11, wherein the top plate has a black color.
